Europäisches Patentamt

(19) European Patent Office

Office européen des brevets

(11) Publication number: 0 007 227
A1

# (12) EUROPEAN PATENT APPLICATION

(21) Application number: 79301360.8

(22) Date of filing: 11.07.79

(51) Int. Cl.³: G 01 B 11/24

(30) Priority: 11.07.78 AU 5038/78

(43) Date of publication of application:
23.01.80 Bulletin 80/2

(84) Designated Contracting States:
AT CH DE FR GB

(71) Applicant: COMMONWEALTH SCIENTIFIC AND
INDUSTRIAL RESEARCH ORGANIZATION
Limestone Avenue
Campbell Australian Capital Territory(AU)

(72) Inventor: Steel, William Howard
6 Abernethy Street, Seaforth
New South Wales(AU)

(72) Inventor: Hegedus, Zoltan Stephen
3/3 Camera Street, Manly
New South Wales(AU)

(74) Representative: Crawford, Andrew Birkby et al,
A.A. THORNTON & CO. Northumberland House 303-306
High Holborn
London WC1V 7LE(GB)

(54) Method and apparatus for measuring the profile of an elongate surface.

(57) Surface profile measurement is carried out, in the situation where there is relative movement between the observer and the surface, by beaming a fan-like, planar beam of light (which term includes infra-red and ultra-violet wavelengths as well as visible light) on to the surface at an acute angle, and monitoring the pattern of the reflected light. In its application to the measurement of rail wear of railway track, the pattern of the reflected light is compared with the pattern of light reflected, in a similar geometrical arrangement, from an unworn rail. Flash tubes and lasers are convenient light sources which, with associated lens arrangements, can produce the planar light beam. The reflected light can conveniently be monitored with a television camera or a diode array. Data concerning the pattern of the reflected beam can be stored for subsequent analysis or reference. Profiles of white hot metal rods can be measured if the system uses an infra-red laser beam and narrow-band filters to cut out unwanted light and thus obtain an acceptable signal to noise ratio when monitoring the reflected light pattern.

FIG. 2.

Method and Apparatus For Measuring
The Profile of an Elongate Surface

This invention concerns the dynamic measurement of the profiles of elongate surfaces. It will find application in situations where a profile has to be measured from a moving observatory, and where a stationary measuring location is used to investigate the shape of moving surfaces. It was developed primarily for the measurement of wear in rails of railway track, in which situation it forms a non-contact, vehicle mountable arrangement for the measurement of track head wear. However, the invention is not limited to this application. Examples of other applications of the invention are in the measurement of profiles of rolled steel rods and joists in a steel rolling mill and in the measurement of the profile of the wheel rims of railway rolling stock (which, it will be understood, are curved elongate surfaces).

In view of the origin of this invention, now reported in the March 1979 issue (No. 133) of "Industrial Research News" (a publication of the Commonwealth Scientific and Industrial Research Organization, of which the present inventors are officers), the invention will be particularly exemplified in this specification in its application to the measurement of rail wear in rails of railway track.

Measurement of track condition is a constant requirement in the operation of a railway and most track parameters can now be measured at speed using appropriately instrumented coaches, such as the high speed track recording coach described by R.B. Lewis of the British Railways Research and Development Division in his recent paper in the "Permanent Way Institution Journal" (1976) entitled "Recording track geometry at speed". Another arrangement for measuring track parameters at speed is featured in U.S. patent specification No. 4,005,601, which describes how certain types of track discontinuity, namely rail end mismatch, rail separation and rail-end batter, may be monitored. High speed profile and guage measuring apparatus is described in the specification of U.S. patent No. 3,517,307. Another profiling technique is described in U.S. patent specification No. 3,924,461.

However, none of these references comments on one major problem with rails, namely rail head wear. This is because rail head wear has yet to be adequately monitored by vehicle-mounted instruments.

Rail head wear occurs primarily on curves of railway track. It is the distortion of the head of the rail due to forces exerted on the rail by vehicle wheels. It is particularly a problem when heavy loads are carried on the track. It is well known on the tracks which carry the iron ore trains in the north of Western Australia.

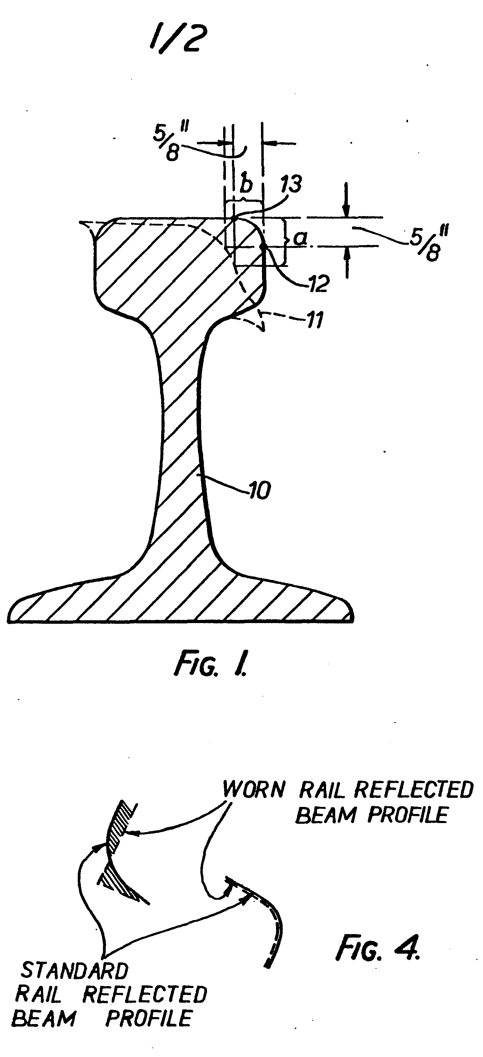

The failure to develop an instrument to measure head wear prior to the present invention is surprising, for when excessive rail head wear occures, it is normal procedure to replace the entire worn rail section. Its detection is such a problem that in track management, expensive preventative maintenance is undertaken (based on experience gained with manual inspections but allowing an adequate safety factor), whereby a section of rail is replaced after a set period of use at a specified traffic density. In addition, there is constant monitoring of rail head wear by the established technique of manually measuring the deviation of the rail from its unworn shape at the "five-eighths" points. This measurement can be understood by reference to Figure 1 of the accompanying drawings, which shows a section through a rail with a typical wear profile illustrated by the dashed-line at the head of the rail. The "five-eighths" points are points 5/8 inch from the top of the undistorted rail and from the flat side of the head of the undistorted rail. To measure the wear in situ, the "five-eighths" points are located using a template and the distances $a$ and $b$ of Figure 1 are measured. Normal procedure is to replace the section of rail if the sum of $a$ and $b$ equals (or becomes greater than) 25 mm.

This manual inspection, however, is performed at intervals of, typically, 50 metres. This does not provide a continuous measurement of the track and a short length of high wear, which would be a dangerous situation for the railway owner, may not be detected. Moreover, notwithstanding the use of a template, different people tend to read at slightly different locations, and in any case, only two points of the rail are sampled, which is not an adequate indication of the head profile of the rail. In short, the manual inspection technique has a number of drawbacks.

The prime objective of the present invention is to provide a method and apparatus which, when adapted to the measurement of rail head wear, will largely overcome the disadvantages of the manual inspection technique for measuring head wear.

In this, the present invention illuminates the rail with a strip of light, monitors the pattern of light reflected from the rail, and compares the reflected pattern with a standard pattern for light reflected from an undistorted rail.

(Note: In this specification, reference to "light" includes electromagnetic radiation in the infra-red and ultra-violet regions, as well as in the visible region.)

According to the present invention, a method for measuring the profile of an elongate surface comprises the steps of:

    (a)   projecting a thin planar beam of light on to the surface at an acute angle relative to the lengthwise direction of the surface,

    (b)   locating a light processing means in the path of the light reflected from the surface, and

    (c)   observing the pattern of the light reflected from the surface which is received by the light processing means.

The measurement will usually be effected by comparing the light pattern received by the light processing means and the light pattern that would be received by the light processing means if the surface had the shape of a preselected reference surface.

In the application of the invention to rail head wear measurement, the thin planar beam is projected on to the top and on to one side of a rail and the reference surface is an unworn rail.

Also according to the present invention, apparatus for measuring the profile of an elongate surface comprises a source of light; apparatus forming light from the source into a planar beam and projecting the beam on to the surface at an acute angle relative to the lengthwise direction of the surface, and means responsive to light located in the path of light which is reflected from the surface, said means responsive to light enabling the pattern of the received reflected light to be determined.

In the method and apparatus of the present invention, the light source may be continuous or pulsed, but will have sufficient power to ensure that, when reflected from a specular surface, the pattern of the reflected beam can be determined. Typically, the source of light will be either a laser (in which case the pencil beam from the laser will be broadened into a planar beam by a cylindrical lens, for example a solid glass rod) or a linear flash lamp suitably imaged on to the surface being measured.

The receiver of light reflected from the surface may be a television camera, an array of photo-diodes on which an image of the reflected light is formed by a lens, or any other suitable light receiver which will produce an image or an image-equivalent of the reflected light from the surface. The comparison of the reflected pattern with a predetermined pattern - the pattern for an undistorted rail in the case of rail head wear measurement - can be performed either visually or by state of the art electronic circuitry, and the information obtained from the comparison can be used as appropriate in particular circumstances. For example, when the comparison shows that substantial wear has taken place, the rails or the surfaces at ground level adjacent to the rails may be appropriately marked with paint or dye. Alternatively, or in addition, the received reflected pattern or the comparison information can be stored for subsequent analysis. It is expected that the comparison information, in addition to indicating when the wear reaches the prescribed limit, will be used in research into rail wear which will lead to a greater understanding of the process of wear.

Further description of the method and apparatus of the present invention, in the form in which it is applied to the measurement of rail head wear, will now be given, by way of example, with reference to the accompanying drawings, in which:

Figure 1 is a sectional sketch of a rail, with a typical distortion profile indicated;

Figures 2 and 3 are schematic plan and elevation views, respectively, of one form of apparatus adapted for mounting on a track vehicle for use in the measurement of rail head wear; and

Figure 4 shows typical reflected light patterns from worn and standard rails.

The rail 10 depicted in Figure 1 has "five-eighths" points 12 and 13. The dashed profile 11 is typical of the rail head shape which is formed, after extensive use, on rails which are on the high leg of a curve. The measurements "a" and "b" are, as noted above, the measurements used in the standard empirical technique for determining the actual wear of the rail.

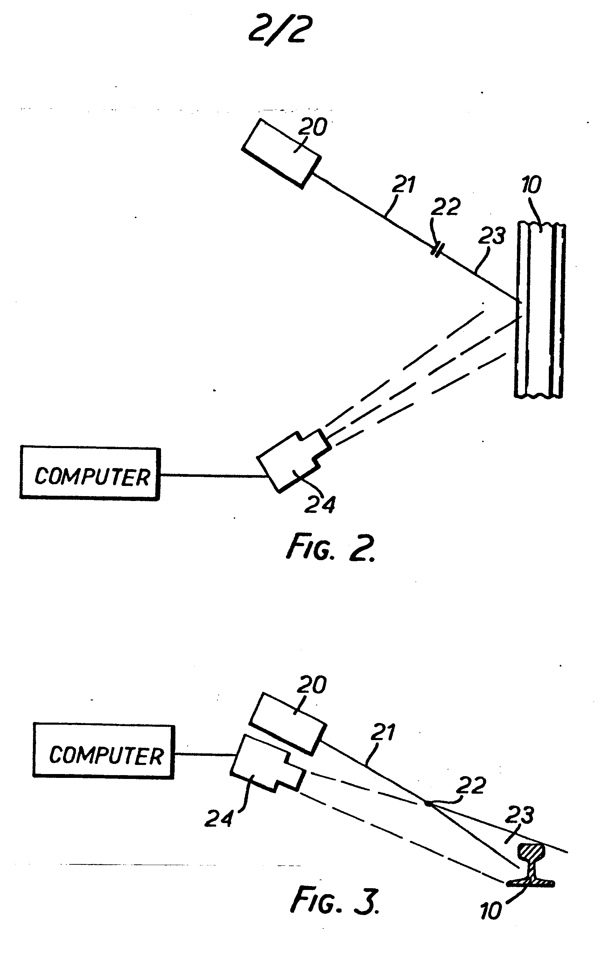

As shown in Figures 2 and 3, the present invention may be realised by the use of a linear flash lamp or a laser 20. In experimental laboratory testing of the present invention, both a helium-neon laser, with a 10 milliwatts continuous output, and a xenon flash tube, have been used. For rail wear measurement, the latter light source is preferred. In the case of measuring the profile of a hot rolled steel rod, rail or joist, a high power pulsed laser is preferred. As already noted, it is not necessary for the laser or flash tube output to be at a visible light wavelength.

The light beam 21 from the flash tube or laser 20 is formed by a combination of cylindrical and spherical lenses 22 into a planar fan-like beam 23 which illuminates the top and the side of the head of rail 10, and one side of the web of rail 10. This form of illumination is equivalent to a knife-edge of light "cutting" the rail at an acute angle relative to the length of the rail.

The light reflected from the rail is received as two lines separated by a distance which corresponds to the non-reflecting region of the rail which is in the shadow of the head of the rail. One of the lines will have a shape determined by the rail head profile. The other line will be a curved line of the light beam reflected from the side of the web of the rail. Typical line shapes are illustrated in Figure 4.

In Figure 3, a television camera 24 has been shown at a lower height above the track than the flash tube or laser 20. This is for convenience of illustration only. In practice, the camera 24 and the flash tube or laser 20 will normally be positioned at the same height above the track, typically about 0.5 metre, and about 1 metre to the side of the rail (unless a mirror is used to reduce this distance).

Additional components, not shown in the drawings but usually necessary when the present invention is used to measure rail head profiles from a rail inspection car, are blowers to produce air blasts across the fronts of the lenses and camera, to prevent dust entering or interfering with these components, and (if a television camera is used) a filter in the television camera to select only light of the wavelength band that gives best discrimination of the signal over the background signal received from ambient light.

In determining the amount of rail wear, the reflected light pattern is compared with the light pattern produced by reflection, using the same instrumental geometry, of a beam of light from an unworn rail. This comparison can be performed by known means. Typically, the reflected light from the side of the web of the rail will be used to enable the patterns to be suitably superimposed. The variation from normal rail head shape is then indicated by the differences between the reflected curves obtained from the actual and the unworn rail heads. This difference is shown by the hatched region in Figure 4. The area of this hatched region can be evaluated, and used as a parameter of rail wear, after calibration with rails having known worn head profiles.

As already mentioned, the comparison may be effected at the point of measurement on the moving vehicle, but alternatively, or additionally, information about the reflected beam pattern may be stored, using any convenient means (for example, a video record of the television camera picture), for processing later.

Although a television camera has been used in the experimental proving of the present inventive concept, it has already been noted that alternative light receiving and processing equipment may be substituted for the camera. One such alternative is an array of photo-sensitive diodes on which an image of the rail is formed by a lens. Such an array would be particularly useful if the light source 20 is an infra-red laser, for such lasers can currently produce more power than helium-neon lasers and the diodes are more sensitive to infra-red radiation than to visible light.

- 10 -

In adapting the present invention to the measurement of the profile of white hot rails and rods in a rolling mill, laser (preferably an infra-red laser) illumination is necessary and narrow band filters are required to eliminate extraneous light and obtain an acceptable signal to noise ratio for observation of the reflected light pattern.

It will be obvious that although the invention is designed for dynamic measurement situations, it can be used for static measurements if necessary.

- 1 -

CLAIMS:-

1.   A method for measuring of the profile of an elongate surface comprising the steps of:

(a)  projecting a thin planar beam of light (as hereinbefore defined) on to the surface at an acute angle relative to the lengthwise direction of the surface,

(b)  locating a light processing means in the path of the light reflected from the surface, and

(c)  observing the pattern of the light reflected from the surface which is received by the light processing means.

2.   A method as defined in claim 1, including the step of comparing the light pattern received by the light processing means and the light pattern that would be received by the light processing means if the surface had the shape of a preselected reference surface.

3.   A method as defined in claim 2, in which the comparison is effected by noting the differences between the received light pattern and the pattern representative of the reference surface.

4.   Apparatus for measuring the profile of an elongate surface comprising a source of light, apparatus forming light from the source into a planar beam and projecting the beam on to the surface at an acute angle relative to the lengthwise direction of to the surface, and means responsive to light located in the path of light which is reflected from the surface, said means responsive to light enabling the pattern of the received reflected light to be determined.

5. Apparatus as defined in claim 4, in which the source of light is a flash tube or a laser and the beam forming and projecting apparatus is a system of lenses.

6. Apparatus as defined in claim 4 or claim 5, in which the means responsive to reflected light is a television camera or a diode array.

7. Apparatus as defined in claim 6, including recording means to store information obtained by the television camera or diode array.

8. Apparatus as defined in any one of claims 4 to 7, including means to compare the pattern received by said means responsive to reflected light with a predetermined pattern.

9. Apparatus as defined in claim 8, in which the elongate surface is the surface of a rail of a railway track, the predetermined pattern is the pattern of light reflected in a similar geometrical arrangement from an unworn rail, the apparatus is mounted on a track vehicle, and the apparatus includes means to mark the ground adjacent to the track to indicate the degree of wear of the head of the rail of railway track.

10. Apparatus as defined in claim 4, in which the surface is a hot metal surface in a rolling mill, the source of light is an infra-red laser, and the means responsive to reflected light is a diode array.

11. A method of measuring the profile of an elongate surface, substantially as hereinbefore described with reference to the accompanying drawings.

12. Apparatus for measuring the profile of an elongate surface, substantially as hereinbefore described with reference to the accompanying drawings.

5/8"

b 13

a 5/8"

12

11

10

Fig. I.

WORN RAIL REFLECTED
BEAM PROFILE

Fig. 4.

STANDARD
RAIL REFLECTED
BEAM PROFILE

FIG. 2.

FIG. 3.

**European Patent Office**

## EUROPEAN SEARCH REPORT

Application number

EP 79 30 1360

| | DOCUMENTS CONSIDERED TO BE RELEVANT | | CLASSIFICATION OF THE APPLICATION (Int. Cl.¹) |
|---|---|---|---|
| Category | Citation of document with indication, where appropriate, of relevant passages | Relevant to claim | |
| X | US - A - 4 052 712 (OHAMA et al. )<br>* Figures 1,3,4 and 5; column 2, lines 12-35; column 3, lines 7-19 * | 1,4,5 | G 01 B 11/24 |
| | -- | | |
| | GB - A - 1 290 096 (ISHIKAWAJIMA)<br>* Figures 1 and 2; page 2, lines 24-120 * | 1-4, 6,8,10 | |
| | -- | | TECHNICAL FIELDS SEARCHED (Int.Cl.³) |
| | US - A - 3 540 258 (SHIBATA et al. )<br>* Figures 4 and 5; column 3, line 11 to column 4, line 1 * | 6,10 | G 01 B 11/24 |
| | -- | | |
| | US - A - 4 040 738 (WAGNER)<br>* Figure 1; Summary of invention * | 5,9 | |
| | -- | | |
| | US - A - 3 976 382 (WESTBY)<br>* Column 2, lines 22-25; column 5, lines 14-17 * | 7,10 | |
| | ----- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-10-1979 | IVES |

EPO Form 1503.1  06.78